# EUROPÄISCHE PATENTANMELDUNG

(11) **EP 0 592 954 A2**
(43) Veröffentlichungstag der Anmeldung: **20.04.1994**
(21) Anmeldenummer: 93116282.0
(22) Anmeldetag: 08.10.1993
(51) Int. Cl.: C09B 47/067

(54) **Verfahren zur Herstellung von Metallphthalocyaninen durch Umsetzen von ortho-Dinitrilen mit Metallkomplexen**

(30) Priorität: 15.10.1992 DE 4234711
(71) Anmelder: BASF Aktiengesellschaft, D-67063 Ludwigshafen (DE)
(72) Erfinder: Kranz, Joachim, Dr., D-67069 Ludwigshafen (DE); Habermann, Wolfgang, Dr., D-55122 Mainz (DE)

(57) **Zusammenfassung**

Verfahren zur Herstellung von Metallphthalocyaninen durch Umsetzen von in organischen Lösungsmitteln gelösten oder suspendierten ortho-Dinitrilen oder pulverförmigen Mischungen von ortho-Dinitrilen mit wasserfreien Ammin-Metallcarbonsäuresalzen oder Metallamino-Carbonsäure-Komplexverbindungen ohne alkalisch oder chloridhaltige Zusatzmittel bei einem ortho-Dinitrilüberschuß von 0,1 bis 5 Gew.%.

## Beschreibung

Die vorliegende Erfindung betrifft ein Verfahren zur Herstellung von Metallphthalocyaninen durch Umsetzen von gelösten oder suspendierten aromatischen ortho-Dinitrilen mit Metalldonatoren in organischen Lösungsmitteln oder Mischungen von pulverförmigen ortho-Dinitrilen mit Metalldonatoren beim Backprozeß.

In der DE-OS 20 06 663 wird ein Verfahren zur Herstellung von Metallphthalocyaninen aus aromatischen o-Dinitrilen und pulverförmigen Metallen oder bestimmten Verbindungen dieser Metalle beschrieben. Die Umsetzung erfolgt dabei zwischen 10 und 100°C in Gegenwart von Hydroxiden, Oxiden, Peroxiden oder Carbonaten von Alkalimetallen oder Erdalkalimetallen in organischen Lösungsmitteln. Die Ausbeuten an Metallphthalocyaninen betragen ca. 70 bis 75 %, bezogen auf das verwendete o-Dinitril.

Dieses Verfahren wird durch die aus der DE-OS 20 06 707 bekannte Methode verbessert, indem dem Reaktionsgemisch ein Komplexbildner für die Metalle zugesetzt wird. Hierdurch werden die Ausbeuten an Metallphthalocyaninen auf bis zu 93 % gesteigert. Die beiden Verfahren haben den Nachteil, daß die Verfahrensprodukte durch Phthalimid, Metallisoindolenine und Triazine verunreinigt sind und daß bei einer Reihe von Metallen die Ausbeuten an Metallphthalocyaninen deutlich unter 90 % liegen.

Weiterhin ist in der GB 216870 ein Verfahren beschrieben worden, bei dem man Metallphthalocyanine durch elektrochemische Umsetzung von aromatischen o-Dinitrilen mit Metallsalzen in praktisch wasserfreien Lösungsmitteln in Gegenwart von Alkalimetallalkoholaten oder Alkalimetallamiden unter Einleiten von Wasserstoff herstellt. In Ausbeuten von > 90 % werden Metallphthalocyanine mit Reingehalten > 95 % erhalten.

Nachteilig bei diesem Verfahren ist, daß ein mit Alkalimetall- und Kupfer- bzw. anderen Metallsalzen verunreinigtes Metallphthalocyanin anfällt, daß in einer Reihe von Verfahrensschritten gereinigt und gefinisht werden muß und Abwasserprobleme bereitet.

Aufgabe der vorliegenden Erfindung war es, die aus dem Stand der Technik bekannten Verfahren so zu verbessern, daß eine möglichst quantitative Ausbeute an Metallphthalocyanin bei hoher Reinheit und guten coloristischen Eigenschaften umweltfreundlich mit geringem verfahrenstechnischem Aufwand erzielt wird.

Es wurde gefunden, daß man hochwertige Metallphthalocyanine durch Umsetzen von gelösten oder suspendierten aromatischen ortho-Dinitrilen mit Metalldonatoren in organischen Lösungsmitteln oder Mischungen von pulverförmigen ortho-Dinitrilen mit Metalldonatoren beim Backprozeß erhält, wenn man die ortho-Dinitrile ohne alkalisch wirkende Zusatzmittel mit wasserfreien Ammin-Metallcarbonsäuresalzen oder Metallaminocarbonsäurekomplexen bei einem ortho-Dinitrilüberschuß von 0,005 bis 15 Gew.-%, vorzugsweise von 0,1 bis 5 Gew.-%, ortho-Dinitril durchführt.

Nach dem Verfahren gemäß der vorliegenden Erfindung erhält man in den meisten Fällen Metallphthalocyanine in Ausbeuten von > 90%, unter optimierten Prozeßbedingungen bzw. mit geeigneten Lösungsmitteln von ≧ 98% in hoher Reinheit.

Die Verfahrensprodukte können je nach Verfahrensbedingungen bei der Synthese nadelförmig oder plättchenförmig anfallen. Der ionogene Metallanteil beträgt weniger als 0,01 % vom Gesamtmetallanteil des Phthalocyanins, wodurch sehr reine und umweltfreundliche Metallphthalocyanine erhalten werden. Durch den Verzicht auf chloridhaltige Zusätze wird außerdem die Bildung unerwünschter toxischer Nebenprodukte bei der Synthese vermieden.

Als Ammincarbonsäuresalze verwendet man die Ammoniakkomplexe der aliphatischen C₁ bis C₆-Monocarbonsäuren. Bevorzugt setzt man die Salze der Essigsäure und Propionsäure ein.

Neben diesen Ammino-Metallmonocarbonsäuresalzen können auch Ammoniakkomplexe der Metallsalze der Di- und Tricarbonsäuren zur Phthalocyaninsynthese verwendet werden.

Als Metalle für die Ammin-Metallcarbonsäuren kommen z.B. Kupfer, Silber, Nickel, Chrom und Zink in Betracht, während für die Metallaminocarbonsäure-Komplexverbindungen z.B. Kupfer, Silber, Nickel, Kobalt, Eisen, Mangan, Chrom und Zink geeignet sind.

Vorzugsweise verwendet man als Ammin-Metallcarbonsäuresalze Diammin-Kupfer-II-Acetat oder Diammin-Kupfer-II-Propionat. Als Metallamincarbonsäurekomplexverbindungen eignen sich bevorzugt die Kupferkomplexe des Glycins und der Aminopropionsäure.

Die Herstellung der Ammin-Metallcarbonsäuresalze kann durch elektrochemische Metallisierung der Carbonsäuren erfolgen. Bei einer anodischen Metallauflösung in wasserfreien organischen Elektrolyten werden die Carbonsäure- bzw. Amminosalze der Carbonsäuren erhalten. Geeignete Lösungsmittel für diesen Zweck sind die C₁-bis C₆-Alkanole, Dimethylformamid, N-Methylpyrrolidon, Dimethylacetamid, N-Formylmorpholin. Die Elektrolyse erfolgt in Gegenwart von Luft oder Sauerstoff. Die Metallkomplexe werden in Ausbeuten um 98 % erhalten.

Neben der elektrochemischen Synthese können die Diammin-Metallcarbonsäuren auch in der Weise hergestellt werden, daß man z.B. in C₁-bis C₆-Alkanolen oder N-Methylpyrrolidon gelöste Metallcarbonsäuresalze mit gasförmigem Ammoniak ausfällt und abtrennt. Wichtig bei beiden Verfahrenstechniken ist die Abwesenheit von Wasser. Als Diammin-Metallcarbonsäuresalze eignen sich bevorzugt Diamin-Kupfer-II-Acetat und Diammin-Kupfer-II-Propionat zur Metallphthalocyaninsynthese.

Bei der Verwendung von Metallaminocarbonsäuren können z.B. die C₂-bis C₆-Aminocarbonsäuresalze verwendet werden. Geeignete Aminocarbonsäuren sind z.B. Glycin, α-Alanin, Aminopropionsäure, Aminobuttersäure, Sarkosin, Valin oder α-Aminohexansäure.

Als aromatische ortho-Dinitrile kommen, z.B. in Betracht: gegebenenfalls durch Alkyl, Alkoxy, Chlor, Brom, Phenyl substituiertes o-Phthalodinitril wie o-Phthalodinitril, Mono-, Di-, Tri- und Tetrachlor-o-phthalodinitril, Methoxy-o-phthalodinitril, Phenyl- und Di-phenyl-o-phthalodinitril, wobei die mono- und disubstituierten Dinitrile die Substituenten vorzugsweise in den Stellungen 4 oder 5 bzw. 4 und 5 tragen, außerdem Naphthalin-1,2-dinitril und Naphthalin-2,3-dinitril. Als Dinitril ist das nicht weiter substituierte o-Phthalodinitril bevorzugt.

Bei der Synthese in Lösungsmitteln kommen für das Verfahren folgende Lösungsmittel in Betracht:
primäre, sekundäre und tertiäre C₁-bis C₁₂-Alkanole, die im Alkanrest linear oder verzweigt sein können, C₂-bis C₆-Alkandiole, C₃-bis C₆-alkantriole sowie die Monoalkylether dieser Di- und Triole. Poly-C₂- bis C₆-alkandiole, Poly-C₃- bis C₆-alkantriole. N-C₁- bis C₄-Alkylamide und N,N-Bis(C₁- bis C₄-Alkylamide) von C₁- bis C₃-Alkansäuren oder Gemische dieser Flüssigkeiten.

Als organische Lösungsmittel sind im einzelnen z.B. zu nennen:
C₁- bis C₁₂-Alkanole: Methanol, Ethanol, Propanol, Isopropanol, Butanol, Isobutanol, sec.-Butanol, Amylalkohol, Isoamylalkohol, sec.-Amylalkohol, n-Hexanol, Isohexanol, n-Heptanol, Isoheptanol, n-Decanol, Isodecanol, n-Dodecanol und Isododecanol;
C₂- bis C₆-Alkandiole und C₃- bis C₆-Alkantriole und deren Polyether: Ethylenglykol, Diethylenglykol, Triethylenglykol, Polyethylenglykol mit 4, 5 und 6 Glykoleinheiten, Propylenglykol-1,2, Propylenglykol-1,3, Di-propylenglykol, Polypropylenglykol mit 3 bis 6 Propylenglykoleinheiten, Glycerin, Butan-1, 2,4-triol, Butandiol-1,4, Butandiol-1,3, Pentandiol-1,5 und Hexandiol-1,6;
aliphatische Carbonsäureamide:
N-Methylformamid, N,N-Dimethylformamid, N-Ethylformamid, N,N-Diethylformamid, N,N-Dipropylformamid, Dimethylacetamid, N,N-Diethylacetamid, N,N-Dipropylacetamid, N,N-Dimethylpropionamid und N,N-Dipropylpropionamid.

Als organische Lösungsmittel sind die C₁- bis C₆-Alkanole und die Monoalkylether des Ethylenglykols bevorzugt. Von diesen sind die C₃-bis C₆-Alkanole, wie Propanol, Isopropanol, n-Butanol, sec.-Butanol, Isobutanol, tert.-Butanol, Amylalkohol, Isoamylalkohol und n-Hexanol, sec.-Hexanol, Isohexanol sowie 2-Ethylhexanol und der Monoethyl- und Monobutylether des Ethylenglykols besonders bevorzugt, da in diesen hohe Ausbeuten an Phthalocyanin erhalten werden und die Aufarbeitung des Reaktionsgemisches durch Filtrieren und einfaches Trocknen der am Phthalocyanin haftenden organischen Flüssigkeit erfolgen kann.

Die Menge an Lösungsmittel ist nicht kritisch, wenn das Reaktionsgemisch vor, während und nach der Reaktion durchmischbar ist. In der Regel wendet man, bezogen auf das o-Dinitril, die 4- bis 40-fache, vorzugsweise die 10- bis 20-fache Gewichtsmenge an Lösungsmitteln an.

Die höchsten Ausbeuten an Metallphthalocyaninen erhält man mit C₃- und C₄-Alkanolen, während mit höheren Alkanolen Metallphthalocyanine in höherer Reinheit entstehen.

Die Synthese der Metallphthalocyanine kann auch in Gegenwart von Stoffen, die als Katalysatoren dienen, erfolgen, z.B. von Harnstoff, Ammoniummolybdat, Chinolin oder Hydrochinon. Die Konzentration der Katalysatoren kann 0,001 bis 5 Gew.-%, vorzugsweise 0,05 bis 0,5 Gew.-%, bezogen auf das Reaktionsgemisch, betragen.

Beim Lösungsmittelverfahren erhält man in einer Reihe von Solventien, insbesondere in Alkanolen, überaus reine Metallphthalocyanine in sehr guter Ausbeute.

Nach der Synthese und der Abtrennung des Pigmentes können z.B. ammoniumacetathaltige Lösungsmittel wieder in Ammino-Metallcarbonsäuresalze umgewandelt und erneut zur Synthese eingesetzt werden.

Die Synthese stabilisierter Metallphthalocyanine gelingt nach dem erfindungsgemäßen Verfahren unter Umgehung des Chlors, das leicht zu unerwünschten Nebenreaktionen führt und eine Umweltbelastung darstellt, dadurch, daß in 4-Stellung substituierte o-Phthalodinitrile, wie z.B. 4-Cyan-o-Phthalodinitril bei der Synthese den o-Dinitrilen zugesetzt werden. Zweckmäßigerweise verwendet man hier ein Mol in 4-Stellung substituiertes o-Dinitril auf 3 Mol o-Dinitril. Beim Lösungsmittelverfahren erhält man bei Verwendung der Amino-Metallcarbonsäuresalze bereits bei kurzen Verweilzeiten und niedrigen Temperaturen von ∼ + 100°C überraschend kornweiche Metallphthalocyanine in der α-Modifikation, die besonders leicht finishbar sind. Gegenüber den bisherigen Synthesen in Lösungsmitteln, bei denen die Metallphthalocyanine während der langen Reaktionszeit in der thermodynamisch stabilen Beta-Modifikation anfallen, führt die neue Synthese mit der schnellen Bereitstellung des Metalls aus den Amino-Metallcarbonsäuresalzen zu einer Verminderung der Finishkosten, wobei ein zusätzlicher Vorteil darin zu sehen ist, daß kein Kupfer im Abwasser anfällt, Korrosionsprobleme z.B. durch Chlorid vermieden werden und keine toxischen Nebenprodukte anfallen.

Die Amino-Metall-Carbonsäurekomplexe geben bei der Synthese ihr Metall wesentlich langsamer als die Ammino-Metallcarbonsäuren ab, so daß anstatt des spontan anfallenden Nadelfilzes durch die geringere Wachstumsgeschwindigkeit blättchen- oder schollenförmige Metallphthalocyanine entstehen, die Effektpigmentcharakter aufweisen. Durch entsprechende Auswahl der Lösungsmittel und Amino-Metallcarbonsäurekomplexe kann die Keimbildung zugunsten der Wachstumsreaktion soweit zurückgedrängt werden, daß wohlproportionierte Pigmentkristalle in Form von Blättchen entstehen.

Bei der Tetramerisierung der reaktionsträgen Chlor-o-Phthalodinitrile wie z.B. dem Tetrachlor-o-Phthalodinitril sind die Ammin-Metallcarbonsäuren den herkömmlichen Synthesen mit Kupferchloriden weit überlegen, da man bereits um 100 bis 120°C in hoher Ausbeute feinkristalline Phthalocyanine in einheitlicher Kristallform und Kristallgröße erhält. Insbesondere wird hier die Bildung unerwünschter toxischer Nebenprodukte vermieden.

Neben dem Umsatz der o-Dinitrile mit Ammino-Metallcarbonsäuren oder Aminometallcarbonsäurekomplexen in organischen Lösungsmitteln kann die Synthese auch ohne Lösungsmittel aus Pulvergemischen mit Hilfe des "Backprozesses" durchgeführt werden. Im Gegensatz zum bisherigen Backverfahren mit Kupferschliff und Kupfer-I-Chlorid läuft die Reaktion beim erfindungsgemäßen Verfahren bereits bei Temperaturen um 100°C ab, wobei kornweiche, leicht finishbare Metallphthalocyanine in der α-Modifikation erhalten werden.

Das erfindungsgemäße Verfahren soll durch die folgenden Ausfüh-rungsbeispiele zusätzlich erläutert werden. Die Prozentangaben beziehen sich auf das Gewicht.

### Beispiel 1

64 g (0,5 Mol) o-Phthalodinitril und
27 g (0.125 Mol) Diammin-Kupfer-II-Acetat
werden gut vermischt und auf 90°C erhitzt, wobei unter Temperaturanstieg auf 190°C und Abdampfen von Ammoniumacetat spontan ein weichsprödes Blaupigment entsteht. Nach Abkühlen erhält man 87,6 g Roh-CuPC, röntgenografisch als Alpha-S-Modifikation bezeichnet:
Die Reinheitsbestimmung geschieht durch zweistündiges Verkochen in einem "Dupont-Lösungsmittelgemisch", bestehend aus 450 ml Ethanol, 400 ml Eisessig und 50 ml Toluol. Nach Filtration über eine Fritte vom Typ G 4, Auswaschen und Trocknen beträgt die Reinheit "nach Dupont": 78,8 %.

Daraus errechnet sich eine CuPC-Ausbeute von 95,8 % d.Th.

### Beispiel 2

51,2 g (0,4 Mol) o-Phthalodinitril und
21,6 g (0.1 Mol) Diammin-Kupfer-II-Acetat werden in
250 ml Isobutanol auf etwa 100°C erhitzt, wobei ein tiefblauer Nadelfilz spontan auskristallisiert; nach Verdünnen mit 50-%igem Methanol isoliert man 55,0 g eines 96,7-%igen reinen Alpha-Kupferphthalocyanins, was einem Umsatz von 92,3 % der Theorie entspricht. (Der Gehalt an ionogenem Kupfer betrug 0,01 %.)

### Beispiel 3

Arbeitet man analog Beispiel 2 in n-Butanol, so springt die exotherme Tetramerisierungsreaktion bei 96°C an und steigt auf 116°C, wobei ein violettblauer Nadelfilz auskristallisiert.

Ausbeute: 56,0 g rohes Alpha-CuPC mit einer Reinheit nach "Dupont" von 94,9 % bedeuten einen Umsatz von 92,2 % der Theorie. Der Gehalt an ionogenem Kupfer betrug 0,01 %.

Analog verwendete Alkohole ergaben folgende Daten:

| Beispiel | Solvens | Reaktionsstoß | Rohausbeute | Reinheit nach Dupont | Theoret. |
|---|---|---|---|---|---|
| 5 | n-Hexanol | 130°→148° | 52,2 g | 98,1 % | 88,9 % |
| 6 | Methylglykol | 96°→115° | 52,0 g | 96,2 % | 86,9 % |
| 7 | Butylglykol | 110°→150° | 50,6 g | 97,5 % | 85,7 % |

Auch die nach den Beispielen 4 bis 6 gewonnenen Pigmente wurden als Kupferphthalocyanine der Alpha-S-Modifikation identifiziert.

### Beispiel 8

Verfährt man wie in Beispiel 3, verwendet jedoch anstelle von Isobutanol das Lösungsmittel N-Methylpyrrolidon, so springt die exotherme Tetramerisierungsreaktion bei 102°C an und es kristallisiert ein dicker Nadelbrei aus, wobei die Temperatur auf 156°C ansteigt. Nach üblicher Aufarbeitung resultieren 53 g rohes Alpha-CuPC mit einer Reinheit nach "Dupont" von 99,6 %, was einer Ausbeute von 91,7 % der Theorie entspricht.

### Beispiel 9

Verfährt man wie in Beispiel 7, setzt jedoch 5 % Überschuß an o-Phthalodinitril ein, um sicher zu sein, daß alles Kupfer abreagiert, so steigt die Ausbeute auf 54,9 g eines blauvioletten Kupferphthalocyanins der Beta-Modifikation mit einer Reinheit nach "Dupont" von 99,8 %, d.h. 95,1 % waren umgesetzt. Der Gehalt an ionogenem Kupfer betrug nur noch ≦ 0,005 %.

Höhere o-Phthalodinitril-Überschüsse und/oder verdünntere Fahrweise, d.h. mit mehr Solvens, das als Mutterlauge nach erneuter "Kupferung" wieder einsetzbar ist, steigern die Ausbeute an Rohblau nur wenig.

### Beispiel 10

Analog Beispiel 8, nur mit 25 % mehr N-Methylpyrrolidon gefahren, ergibt eine Ausbeute an blauvioletten Nadeln von 55,0 g rohem Beta-Kupferphthalocyanin mit einer Reinheit nach "Dupont" von 99,9 %, d.h. einen Umsatz von 95,4 % d.Th.

### Beispiel 11

19,2 g (0,15 Mol) o-Phthalodinitril
10,4 g (0,05 Mol) 4-Phenyl-o-Phthalodinitril und
12,3 g (0,05 Mol) Diammin-Kupfer-II-Acetat werden in
100 ml N-Methylpyrrolidon erhitzt. Bei 116°C setzt spontane Pigmentbildung ein, die Temperatur steigt auf 145°C; nach Verdünnung mit wäßrigem Methanol erhält man 28,9 Rohblau; da substituiertes CuPC in organischen Solventien z.T. löslich ist, wurde das Rohblau aus konzentrierter Schwefelsäure umgelöst;
Reinheit = 91,9 %, was einer Ausbeute von 81,7 % entspricht.

| Analyse: C₃₈H₂₀N₈Cu (Mol-Gew. 652,194) | | | | | | | | |
|---|---|---|---|---|---|---|---|---|
| berechnet: | 69,98 % | C | 3,09 | H | 17,18 % | N | 9,75 % | Cu |
| gefunden: | 69,0 % | C | 3,4 | H | 17,0 % | N | 9,4 % | Cu |

### Beispiel 12

38,4 g (0,3 Mol) o-Phthalodinitril,
17,3 g (0,1 Mol) 4-Nitro-o-Phthalodinitril und
12,3 g (0,1 Mol) Diammin-Kupfer-II-Acetat werden in
200 ml N-Methylpyrrolidon erhitzt. Bei 130°C setzt die exotherme Reaktion ein, wobei unter Temperaturanstieg auf 154°C ein dicker, blauer Kristallbrei ausfällt. Nach Aufarbeiten erhält man 58,4 g blauviolette Nadeln als röntgenografisch reine Alpha-Modifikation, die auch nach Toluolverkochung voll erhalten bleibt.

Nach Schwefelsäurereinigung ist die Reinheit 96,2 % und die Ausbeute 90,6 %.

| Analyse: C₃₂H₁₅N₉O₂Cu (Mol-Gew. 621,093) | | | | | | | | |
|---|---|---|---|---|---|---|---|---|
| berechnet: | 61,88 % | C | 2,44 | H | 20,30 % | N | 10,23 % | Cu |
| gefunden: | 61,5 % | C | 2,6 | H | 20,2 % | N | 9,9 % | Cu |

### Beispiel 3

74 g (0,4 Mol) t-Butyl-o-Phthalodinitril und
22 g (0,1 Mol) Diammin-Kupfer-II-Acetat werden in
200 ml Dimethylformamid erhitzt. In exothermer Reaktion entstehen spontan bei 107°C violett-blaue Kristallnadeln (Endtemperatur: 128°C); nach Aufarbeiten mit verdünntem Methanol erhält man
67,7 g Rohpigment, in röntgenografisch reiner Alpha-Modifikation,die auch nach Verkochen in Toluol bestehen bleibt; Reinheit nach Schwefelsäureumlösung: 94,5 %, woraus sich eine Ausbeute von 80 % d.Th. errechnet.

### Beispiel 14

Arbeitet man wie in Beispiel 13, jedoch ohne Lösungsmittel, so erhält man einen Reaktionsstoß von 107° auf 172°C, wobei unter Ammonsalzsublimation 89,3 g Rohpigment entsteht. Nach Auskochen in verdünnter Salzsäure erhält man 72,2 g Reinpigment (= 90,4 % d. Th.)

| Analyse: C₄₈H₄₈N₈Cu (Mol-gew. 800,528) | | | | | | | | |
|---|---|---|---|---|---|---|---|---|
| berechnet: | 72,02 % | C | 6,04 | H | 14,00 % | N | 7,94 % | Cu |
| gefunden: | 71,8 % | C | 5,9 | H | 14,2 % | N | 7,8 % | Cu |

### Beispiel 15

52 g (0,4 Mol) 1,2-Dicyanopyrazin,
21,6 g (0,1 Mol) Diammin-Kupfer-II-Acetat werden in
200 ml N-Methylpyrrolidon unter Rühren erhitzt; bei 92 °C fallen schwarzblaue Kristalle aus, wobei die Temperatur auf 136 °C steigt. Nach Verdünnen mit Methanol isoliert man in üblicher Weise
58,1 g etwa 99,2 %iges Pigment, d.h. 98,7 % Ausbeute;

| Analyse: C₂₄H₈N₁₆Cu (Mol-gew. 584,00) | | | | | | | | |
|---|---|---|---|---|---|---|---|---|
| berechnet: | 49,36 % | C | 1,38 | H | 38,38 % | N | 10,88 % | Cu |
| gefunden: | 48,3 % | C | 2,0 | H | 36,9 % | N | 10,6 % | Cu |

### Beispiel 6

26,6 g (0,01 Mol) Tetrachlor-o-Phthalodinitril (92,7 %ig),
5,5 g (0,05 Mol) Diammin-Kupfer-II-Acetat und
0,1 g Ammoniummolybdat werden in
100 ml o-Dichlorbenzol unter Rühren auf 150°C erhitzt, wobei sich ein dicker, grüner Kristallbrei bildet. Nach einer Stunde verdünnt man mit
100 ml Methanol und saugt den Kristallbrei ab, wäscht und trocknet ihn, wobei man 26,8 g Rohgrünpigment, Reinheit nach "Dupont" = 86,6 %, d.h. mit 88,7 % der theoretischen Ausbeute, erhält.

### Beispiel 17

266 g (1 Mol) Tetrachlor-o-Phthalodinitril (92,7 %ig),
54 g (0,25 Mol) Diammin-Kupfer-II-Acetat und
0,2 g Ammoniummolybdat werden in
600 ml Solvesso (Gemisch aus Tri- und Tetraalkylbenzolen Kp. 180-200°C) erhitzt: bei 160°C Ausbildung grüner Kristallnadeln; nach zwei Stunden wird mit Methanol aufgearbeitet:
268,3 g Rohgrün, Reinheit nach "Dupont" = 93,1 % Ausbeute 95,6 % d. Th.

### Beispiel 18

Verfährt man wie in Beispiel 17, verwendet jedoch anstelle von Solvesso Nitrobenzol, so erhält man 255,3 g eines 93,9 %igen Rohgrüns, was einem Umsatz von 91,8 % der Theorie entspricht.

### Beispiel 19

107 g (0,4 Mol) Tetrachlor-o-Phthalodinitril (92,7 %ig) werden in
250 ml o-Nitrotoluol unter Rühren auf 130°C erhitzt und mit
25 g (0,1 Mol) Diammin-Kupfer-II-Propioniat versetzt, wobei unter Temperaturanstieg auf 178°C ein dicker, grüner Kristallbrei ausfällt; nach üblichem Verdünnen mit Methanol erhält man
96,0 g eines 92,6 %igen Rohgrüns, das einer Ausbeute von 84,6 % entspricht.

### Beispiel 20

### Semicyan-Kupferphthalocyanin

44,8 g (0,35 Mol) o-Phthalodinitril
7,7 g (0,05 Mol) 1,2,4 Tricyano-benzol = 4-Cyan-o-PDN und
24,5 g (0,1 Mol) Diammin-Kupfer-II-Propionat werden in
200 ml N-Methylpyrrolidon unter Rühren erhitzt; unter Ammoniumsalz-Sublimation steigt die Temperatur von 120°C auf 150°C an, während das Rohblau als dicke Pigmentsuspension spontan ausfällt. Nach Verdünnen mit wäßrigem Methanol isoliert man 55,7 g eines, aus je 50 % Alpha- und Beta-Modifikation bestehenden, 96,2 % reinen Semicyan-Kupferphthalocyanins (Umsatz = 91,2 % der Theorie); nach Toluol-Test (= einstündiges Verkochen in siedendem Toluol) findet man noch 28 % der Alpha-Form.

### Beispiel 21

25,5 g (0,2 Mol) 0-Phthalodinitril und
11,0 g (0,05 Mol) Diglycinkupfer werden in
100 ml N-Methylpyrrolidon auf 170°C erhitzt, wobei langsam violett-blaue Kristallblättchen ausfallen, die man nach 3 Std. absaugt, mit Methanol wäscht und trocknet; man erhält so
22,8 g eines 94,9 % reinen Kupferphthalocyanins der Beta-Modifikation in gleichmäßiger Form von Blättchen, die für Effektpigmente geeignet sind.

### Beispiel 22

Verfährt man wie in Beispiel 21, setzt jedoch 0,1 g Ammoniummolybdat als Katalysator hinzu, so erhält man
22,3 g eines 98,1 % reinen Kupferphthalocyanins der Beta-Modifikation in Form violetter, glänzender Kristallblättchen, die ein hervorragendes Effektpigment darstellen.

## Patentansprüche

1. Verfahren zur Herstellung von Metallphthalocyaninen durch Umsetzen von gelösten oder suspendierten aromatischen ortho-Dinitrilen mit Metalldonatoren in organischen Lösungsmitteln oder Mischungen von pulverförmigen ortho-Dinitrilen mit Metalldonatoren beim Backprozeß, dadurch gekennzeichnet, daß man die ortho-Dinitrile ohne alkalisch wirkende Zusatzmittel mit wasserfreien Ammin-Metallcarbonsäuresalzen oder Metallaminocarbonsäure-Komplexverbindungen bei einem ortho-Dinitrilüberschuß von 0,1 bis 5 Gew.-% ortho-Dinitril durchführt.

2. Verfahren nach Anspruch 1, dadurch gekennzeichnet, daß man als Carbonsäuren für die Ammin-Metallcarbonsäuresalzekomplexe die C₁ bis C₆-Monocarbonsäuren verwendet.

3. Verfahren nach Anspruch 1 bis 3, dadurch gekennzeichnet, daß man als Ammin-Metallcarbonsäuresalze Diammin-Kupfer-II-Acetat und Diammin-Kupfer-II-Propionat verwendet.

4. Verfahren nach Anspruch 1 bis 4, dadurch gekennzeichnet, daß man die Ammin-Metallcarbonsäuresalze durch eine elektrochemische Metallisierung der C₁- bis C₆-Monocarbonsäuren in C₂-bis C₆-Alkanolen oder N-Methylpyrrolidon und anschließende Ausfällung durch Begasung mit Ammoniak herstellt.

5. Verfahren nach Anspruch 1, dadurch gekennzeichnet, daß man in C₂- bis C₆-Alkanolen oder N-Methylpyrrolidon gelöste Metallcarbonsäuresalze durch Fällung mit Ammoniak zu Ammin-Metallcarbonsäuresalzen umsetzt.

6. Verfahren nach Anspruch 1, dadurch gekennzeichnet, daß als MetallAmminocarbonsäuren die Metallkomplexe der C₂- bis C₆-Amminocarbonsäuren verwendet.

7. Verfahren nach Anspruch 1 bis 6, dadurch gekennzeichnet, daß man als organische Lösungsmittel für die Metallphthalocyaninsynthese aliphatische C₁- bis C₆-Alkanole, N-Methylpyrrolidon, Dimethylformamid, o-Dichlorbenzol, Tri- und Tetraalkylbenzolgemische (Solvesso), Nitrobenzol und o-Nitrotoluol verwendet.

8. Verfahren nach Anspruch 1 bis 7, dadurch gekennzeichnet, daß zur Herstellung nadelförmiger Metallphthalocyanine die Ammin-Metallcarbonsäuren der C₁ bis C₆-Monocarbonsäuren verwendet werden.

9. Verfahren nach Anspruch 1 bis 7, dadurch gekennzeichnet, daß zur Herstellung plättchenförmiger Metallphthalocyanine Metall-Amminocarbonsäurekomplexe verwendet werden.
